# FASCICULE DE BREVET EUROPEEN

(11) **EP 1 708 458 B1**
(45) Date de publication et mention de la délivrance du brevet: **10.10.2007**
(21) Numéro de dépôt: 06290512.0
(22) Date de dépôt: 23.03.2006
(51) Int. Cl.: H04L 29/06, H04L 12/28

(54) **Procédé et dispositif d'association d'un dispositif de communication à une passerelle**
Verfahren und Gerät zur Zuordnung einer Kommunikationsvorrichtung zu einem Gateway
Method and apparatus for associating a communication device to a gateway

(30) Priorité: 31.03.2005 FR 0503193
(43) Date de publication de la demande: 04.10.2006
(73) Titulaire: Sagem Communication S.A., 75015 Paris (FR)
(72) Inventeur: Hervo, Vincent, 92100 Boulogne Billancourt (FR); Dalle, Eric, 92370 Chaville (FR)
(74) Mandataire: Maillet, Alain

(56) Documents cités:
- WO-A-03/094438
- WO-A-20/04058403

## Description

La présente invention concerne un procédé et dispositif d'association d'un dispositif de communication à une passerelle.

Plus particulièrement, l'invention se situe dans le domaine des réseaux locaux domestiques de type réseaux locaux sans fil ou réseaux locaux utilisant le réseau de distribution d'énergie électrique du domicile de l'utilisateur du réseau local domestique, comme médium de transmission des informations. De tels réseaux locaux domestiques sont plus sensibles aux tentatives d'intrusion ou d'espionnage par une tierce personne que les réseaux filaires classiques. Afin de remédier à ces problèmes, des solutions ont été proposées.

Dans un réseau local sans fil conforme au standard IEEE 802.11, pour qu'un dispositif de communication puisse se connecter au réseau local sans fil, il est nécessaire que celui-ci soit informé de l'identifiant SSID, acronyme de « Service Set Identifier » du point d'accès du réseau local sans fil. Le point d'accès du réseau sans fil est, par exemple, la passerelle d'un réseau local domestique reliant le réseau local domestique à un réseau de communication public.

Lors de la fabrication d'un équipement conforme au standard IEEE 802.11, un constructeur le configure avec un identifiant SSID prédéterminé. Ensuite, l'identifiant SSID est modifié de manière à éviter qu'un dispositif de communication tiers ne puisse accéder au réseau local sans fil. L'identifiant SSID est ainsi modifié par l'utilisateur du réseau local sans fil pour chaque dispositif de communication qu'il souhaite connecter.

De plus, pour résoudre le problème de la confidentialité des échanges sur le réseau local sans fil, le standard IEEE 802.11 intègre un mécanisme de chiffrement des trames 802.11 au moyen d'une clef de chiffrement. Il s'agit du système WEP, acronyme de « Wired Equivalent Privacy ». Le principe du système WEP consiste à déclarer ladite clef de chiffrement du réseau local sans fil considéré au niveau de chaque dispositif de communication que l'utilisateur souhaite connecter. La clef de chiffrement, qui est partagée par tous les dispositifs de communication du réseau local sans fil, doit ainsi être déclarée par l'utilisateur au moyen d'une interface homme-machine que chaque dispositif de communication comporte.

D'autres solutions à ce problème de confidentialité ont été proposées, telles que le système WPA ou encore le système WPA2. Le système WPA est l'acronyme de « WIFI Protected Access ». Selon ce système WPA, la clef de chiffrement des trames varie d'une trame à une autre et d'un dispositif de communication à un autre.

Lorsqu'il utilise comme médium de transmission des informations le réseau de distribution d'énergie électrique du domicile de l'utilisateur, un réseau local domestique est, par exemple, un réseau local conforme au standard « HomePlug 1.0 » développé par le consortium « HomePlug Powerline Alliance ». Selon ce standard, les communications transmises sur le réseau local domestique peuvent être aussi sécurisées au moyen d'une clef de chiffrement. Classiquement, lors de l'installation d'un réseau « HomePlug 1.0 », la clef de chiffrement attribuée au réseau est mise à une valeur par défaut connue de tous les dispositifs conformes au standard « HomePlug 1.0 ». Cette clef de chiffrement NEK, acronyme de « Network Encryption Key » est une clef comportant 56 bits et obtenue grâce à l'application d'un algorithme défini par le standard « Homeplug 1.0 » à partir de la chaîne de caractères représentant le mot de passe du réseau local domestique considéré. Le mot de passe par défaut est « HomePlug ». Les dispositifs de communication qui ont un même mot de passe, appartiennent à un même réseau logique. Toutes les trames transmises sur le réseau local domestique sont chiffrées avec la clef de chiffrement NEK. La clef de chiffrement NEK est là aussi partagée par tous les dispositifs de communication du réseau. La clef de chiffrement NEK doit être modifiée et déclarée par l'utilisateur du réseau local domestique par l'intermédiaire de l'interface homme-machine que chaque dispositif de communication comporte.

Les solutions exposées ci-dessus posent néanmoins un certain nombre de problèmes.

En effet, aussi bien pour un réseau local domestique utilisant le réseau de distribution d'énergie électrique du domicile de l'utilisateur du réseau local domestique comme médium de transmission des informations, que pour un réseau local domestique conforme au standard IEEE 802.11, il est nécessaire de définir un secret partagé.

Pour le standard IEEE 802.11, le secret partagé est composé de l'identifiant SSID et de la clef de chiffrement. Pour un réseau local domestique utilisant le réseau de distribution d'énergie électrique du domicile de l'utilisateur du réseau local domestique comme médium de transmission des informations, le secret partagé est uniquement la clef NEK de chiffrement.

Chaque dispositif de communication doit ainsi disposer d'une interface homme-machine permettant la saisie du secret partagé du réseau local domestique. Ce qui n'est pas envisageable pour des dispositifs de communication tels que, par exemple, des terminaux audiovisuels communément appelés Set Top Box (STB) ou des passerelles permettant la réception d'informations audiovisuelles ou d'informations de messagerie électronique ou de pages WEB téléchargées d'un site Internet.

De plus, la saisie sur chaque dispositif de communication du secret partagé est une tâche fastidieuse à effectuer par l'utilisateur du réseau local domestique, rendant celle-ci rédhibitoire pour certains utilisateurs, au risque de rendre leur réseau local domestique sensible aux tentatives d'intrusion ou d'espionnage par une tierce personne.

Dans le document WO 2004/058403 A2, le gestionnaire de configuration installé sur le dispositif de communication d'un utilisateur, invite cet utilisateur à allumer la passerelle avec laquelle l'utilisateur souhaite associer son dispositif de communication.

L'invention tente de résoudre les inconvénients de l'art antérieur en proposant un procédé d'association d'un dispositif de communication à une passerelle d'un réseau local domestique qui, d'une part, garantisse une grande sécurité vis-à-vis d'éventuelles tentatives, par un tiers, d'intrusion dans le réseau local domestique ou d'espionnage des informations transmises dans le réseau local domestique, et, d'autre part, facilite voire supprime les tâches à accomplir par l'utilisateur lors de l'installation d'un dispositif de communication. Plus précisément, l'invention vise à permettre à l'utilisateur d'associer un équipement, par exemple, de type set-top box, à une passerelle de son choix dans un réseau local domestique partagé par de multiples applications.

Selon un premier aspect de l'invention, l'invention concerne un procédé d'association d'un dispositif de communication, par l'intermédiaire d'un réseau de communication, à une passerelle, caractérisé en ce que le procédé comporte les étapes effectuées par la passerelle de :
- détection d'au moins une commande effectuée par l'utilisateur du réseau de communication ;
- obtention du secret partagé de l'interface de communication associée à la passerelle ;
- transfert d'un identifiant prédéterminé, à l'interface de communication associée à la passerelle pour la configuration de l'interface de communication dans un mode d'association ;
- transfert dans le réseau de communication, de messages à destination du dispositif de communication, pour l'établissement dans le réseau de communication d'une session point à point entre la passerelle et le dispositif de communication ;
- transfert dans la session point à point établie, du secret partagé, pour l'association du dispositif de communication à la passerelle.

Corrélativement, l'invention concerne une passerelle d'un réseau de communication dans lequel est relié un dispositif de communication, caractérisé en ce que la passerelle comporte :
- des moyens de détection d'au moins une commande effectuée par l'utilisateur du réseau de communication ;
- des moyens d'obtention du secret partagé de l'interface de communication associée à la passerelle ;
- des moyens de transfert d'un identifiant prédéterminé, à l'interface de communication associée à la passerelle pour la configuration de l'interface de communication dans un mode d'association ;
- des moyens de transfert dans le réseau de communication, de messages à destination du dispositif de communication, pour l'établissement dans le réseau de communication d'une session point à point entre la passerelle et le dispositif de communication ;
- des moyens de transfert dans la session établie, du secret partagé, pour l'association du dispositif de communication à la passerelle.

Ainsi, en détectant au moins une commande effectuée par l'utilisateur du réseau de communication, le transfert du secret partagé du réseau du communication n'est effectué que lorsque l'utilisateur a besoin de connecter un nouveau dispositif de communication au réseau local domestique. Le risque d'intrusion dans le réseau local domestique par des tiers est ainsi supprimé.

De plus, les dispositifs de communication n'ont plus besoin de disposer d'une interface homme-machine permettant de saisir un secret partagé du réseau de communication, celui-ci étant communiqué automatiquement par la passerelle.

Ainsi, l'association du dispositif de communication à la passerelle est effectuée de manière simple et automatique, sans que l'utilisateur du réseau de communication n'ait à modifier le secret partagé.

Selon un autre aspect de l'invention, la passerelle reçoit des informations d'un réseau de communication public et, lorsque le secret partagé est transféré dans la session point à point établie, la passerelle transfère le secret partagé à l'interface de communication associée à la passerelle, transfère les informations vers l'interface de communication associée à la passerelle, pour le chiffrement, par l'interface de communication associée à la passerelle, des informations à partir d'au moins une partie du secret partagé et pour le transfert des informations chiffrées au dispositif de communication dans la session point à point établie.

Ainsi, l'accès au réseau de communication est effectué de manière sécurisée. Le risque d'espionnage des informations transmises dans le réseau de communication par des tiers est supprimé.

Selon un autre aspect de l'invention, préalablement au transfert, dans la session point à point établie, du secret partagé, on transfère dans le réseau de communication, des messages à destination du dispositif de communication, pour la négociation d'une clef de chiffrement temporaire et le secret partagé est chiffré par la clef de chiffrement temporaire.

Ainsi, la transmission du secret partagé est effectuée de manière sécurisée. Les tiers ne peuvent alors pas connaître l'identifiant et/ou la clé de chiffrement et utiliser ceux-ci à des fins frauduleuses.

Selon un autre aspect de l'invention, les informations reçues par la passerelle du réseau de communication public, sont des informations d'un premier type et des informations d'un second type, les informations d'un premier type étant des informations fournies par un premier fournisseur de service, les informations d'un second type étant différentes des informations d'un premier type et les informations transférées par la passerelle dans la session point à point établie, sont les informations d'un premier type.

Ainsi, en transmettant les informations d'un premier type dans la session point à point établie, un autre dispositif de communication ne recevra pas les informations d'un premier type même si celles-ci sont destinées à une pluralité de dispositifs de communication. Les informations d'un premier et d'un second types sont ainsi séparées dans le réseau de communication.

De plus, en transmettant les informations d'un premier type dans la session point à point établie, il est possible d'implémenter un mécanisme d'acquittement des informations reçues et donc, de pouvoir effectuer des retransmissions de données lorsque celles-ci n'ont pas été reçues correctement. Le mécanisme d'acquittement est d'autant plus intéressant lorsque les données d'un premier type sont des données audiovisuelles. Ce qui n'est pas envisageable dans le cas de la diffusion classique d'informations.

L'invention concerne aussi un procédé d'association d'un dispositif de communication à une passerelle, par l'intermédiaire d'un réseau de communication, caractérisé en ce que le procédé comporte les étapes effectuées par le dispositif de communication de :
- génération d'au moins un message d'invitation de l'utilisateur du réseau de communication à appuyer sur une touche prédéterminée de la passerelle ;
- transfert dans le réseau de communication, de messages à destination de la passerelle, pour l'établissement dans le réseau de communication, d'une session point à point entre la passerelle et le dispositif de communication ;
- réception, dans la session point à point établie, d'un secret partagé, pour l'association du dispositif de communication à la passerelle.

Corrélativement, l'invention propose un dispositif de communication apte à être associé à une passerelle par l'intermédiaire d'un réseau de communication, caractérisé en ce que le dispositif de communication comporte :
- des moyens de génération d'au moins un message d'invitation de l'utilisateur du réseau de communication à appuyer sur une touche prédéterminée de la passerelle ;
- des moyens de transfert dans le réseau de communication, de messages à destination de la passerelle, pour l'établissement dans le réseau de communication, d'une session point à point entre la passerelle et le dispositif de-communication ;
- des moyens de réception dans la session point à point établie, d'un secret partagé, pour l'association du dispositif de communication à la passerelle.

Ainsi, en invitant l'utilisateur du réseau de communication à appuyer sur une touche prédéterminée de la passerelle, le dispositif de communication est apte à être automatiquement associé à la passerelle, sans que l'utilisateur du dispositif de communication n'ait à effectuer de manipulations complexes.

L'invention concerne aussi un système d'association d'un dispositif de communication, par l'intermédiaire d'un réseau de communication, à une passerelle, caractérisé en ce que le système d'association comporte :
- des moyens de génération d'au moins un message d'invitation de l'utilisateur du réseau de communication à appuyer sur une touche prédéterminée de la passerelle ;
- des moyens de détection d'au moins une commande effectuée par l'utilisateur du réseau de communication ;
- des moyens d'obtention du secret partagé de l'interface de communication associée à la passerelle ;
- des moyens de transfert d'un identifiant prédéterminé, à l'interface de communication associée à la passerelle pour la configuration de l'interface de communication dans un mode d'association ;
- des moyens de transfert dans le réseau de communication, de messages à destination du dispositif de communication, pour l'établissement dans le réseau de communication d'une session point à point entre la passerelle et le dispositif de communication ;
- des moyens de transfert dans la session établie, du secret partagé, pour l'association du dispositif de communication à la passerelle.

Les avantages du système étant identiques à ceux précédemment mentionnés, ceux-ci ne seront pas rappelés.

L'invention concerne aussi les programmes d'ordinateur stockés sur un support d'informations, lesdits programmes comportant des instructions permettant de mettre en oeuvre les procédés précédemment décrits, lorsqu'ils sont chargés et exécutés par au moins un système informatique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 représente un système de communication dans lequel la présente invention est implémentée ;
- la Fig. 2 représente un schéma bloc d'un dispositif de communication d'un premier type selon la présente invention ;
- la Fig. 3 représente un schéma synoptique d'une passerelle selon la présente invention ;
- la Fig. 4 représente un diagramme illustrant l'algorithme exécuté par un dispositif de communication d'un premier type pour créer une session point à point dans le réseau local domestique avec la passerelle et pour associer ce dispositif de communication à la passerelle, selon la présente invention ;
- la Fig. 5 représente l'algorithme exécuté par la passerelle pour la création d'une session point à point dans le réseau local domestique avec le dispositif de communication d'un premier type et l'association du dispositif de communication d'un premier type à la passerelle selon la présente invention.

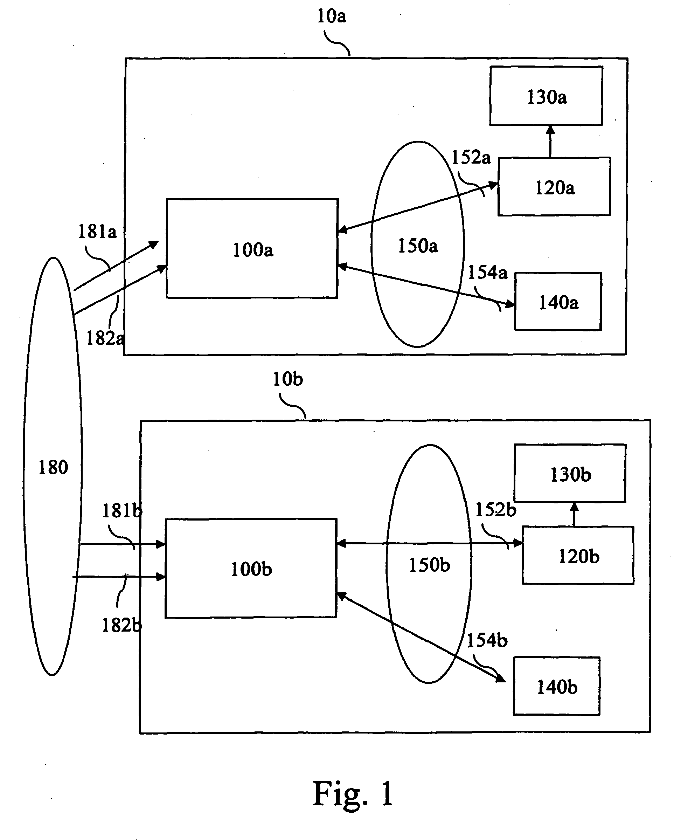

La **Fig. 1** représente un système de communication dans lequel la présente invention est implémentée. Ce système de communication comprend des réseaux de communication 150a et 150b respectivement reliés à un réseau de communication public 180 par l'intermédiaire de dispositifs de communication tels que des passerelles 100a et 100b. Deux réseaux de communication 150a et 150b sont représentés à la Fig. 1 mais on comprendra qu'un nombre plus important de réseaux de communication 150 peuvent être reliés au réseau de communication 180 chacun au moyen d'une passerelle 100.

Les réseaux de communication 150a et 150b sont des réseaux locaux domestiques auxquels sont connectés des dispositifs de communication d'un premier type 120a, 120b et d'un second type 140a, 140b.

Le réseau de communication public 180 est, par exemple, un réseau de communication basé sur la technologie ATM, acronyme de « Asynchrounous Transfer Mode » qui délivre aux passerelles 100a et 100b des informations d'un premier type et des informations d'un second type.

Les passerelles 100a et 100b sont reliées au réseau de communication 180, par exemple, par une liaison de type DSL, acronyme de Digital Line Subscriber. En variante, les passerelles 100a et 100b sont reliées au réseau de communication 180 par une liaison conforme à la norme WIMAX, acronyme de « Worldwide interoperability for Microwave Access ». Les passerelles 100a et 100b sont, par exemple, des passerelles telles que celles commercialisées par la société SAGEM SA sous la dénomination commerciale F@st 3302.

Les informations reçues par les passerelles 100 sont des informations de deux types distincts. Les informations d'un premier type sont préférentiellement des informations audiovisuelles fournies par un premier fournisseur de service. Certaines des informations d'un premier type sont destinées à une pluralité de dispositifs de communication d'un premier type 120. Pour cela, l'adresse de destination comprise dans ces trames d'informations d'un premier type est une adresse de diffusion ou de « multicast ».

Les informations d'un second type comprennent des informations de type données telles des pages Internet téléchargées du réseau de communication 180 ou des messages de messagerie électronique fournis par au moins un second fournisseur de service. Les informations du second type sont des informations qui sont en général destinées à un unique dispositif de communication de second type 140. Pour cela, l'adresse de destination comprise dans les trames d'informations du second type est l'adresse du dispositif de communication d'un second type 140 destinataire des informations d'un second type.

Les passerelles 100a et 100b reçoivent les deux types d'informations du réseau de communication 180 par l'intermédiaire de deux canaux virtuels. Les canaux virtuels sont, par exemple, conformes au principe de la technologie ATM. Les canaux virtuels notés 181a et 181b sont dédiés à la transmission des informations d'un premier type tandis que les canaux virtuels 182a et 182b sont dédiés à la transmission des informations d'un second type.

Les passerelles 100a et 100b transfèrent respectivement les deux types d'informations dans un format approprié respectivement sur les réseaux de communication 150a et 150b.

Le réseau de communication 150a est un réseau local domestique auquel sont connectés des dispositifs de communication du premier type 120a et du second type 140a.

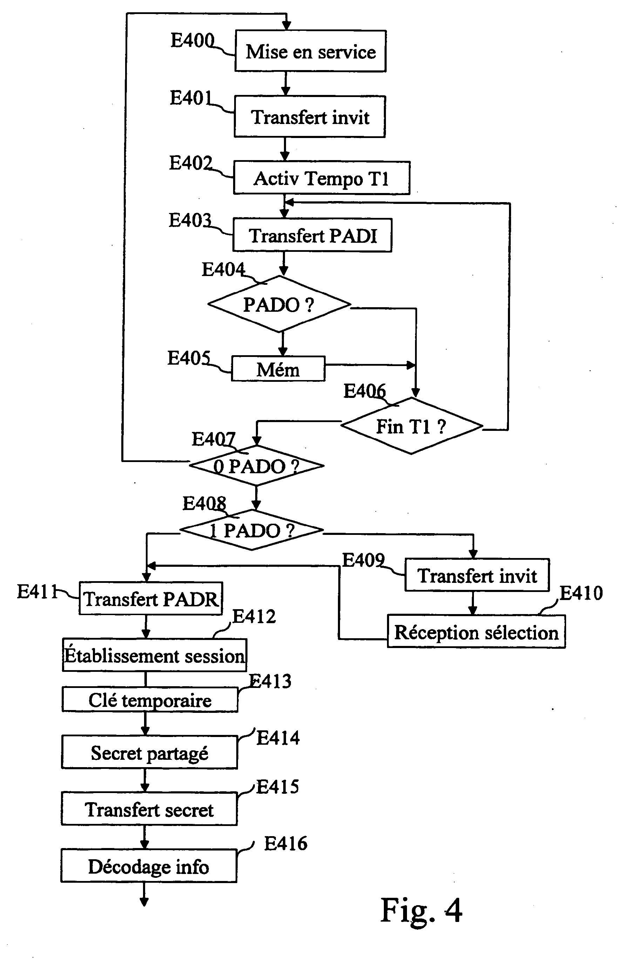

Le dispositif de communication du premier type 120a est, par exemple, un terminal audiovisuel communément appelé Set Top Box (STB) qui permet l'accès, par l'intermédiaire du réseau de communication 180, à des services de fourniture d'informations du premier type, plus précisément des informations audiovisuelles telles que des programmes télévisés. Le dispositif de communication 120a est relié à un téléviseur 130a et transfère à celui-ci, après un déchiffrement des informations du premier type, les vidéos ou programmes télévisés reçus. Selon l'invention, le dispositif de communication 120a est apte à générer, comme cela sera explicité par la suite en regard de la Fig. 4, des messages d'invitation reproduits, par exemple, par le téléviseur 130a et à destination de l'utilisateur du réseau de communication 150a.

Le dispositif de communication du second type 140a est, par exemple, et de manière non limitative, un ordinateur ou un assistant personnel, qui permet, par l'intermédiaire du réseau de communication 180, l'accès à des services de fourniture d'informations du second type, telles que la messagerie électronique, ou la consultation de pages WEB.

Seuls un dispositif d'un premier type 120a et un dispositif d'un second type 140a sont représentés à la Fig. 1, mais on comprendra que l'invention englobe également les cas où un nombre plus important de dispositifs du premier type et/ou du second type sont reliés au réseau local domestique 150a.

Le réseau local domestique 150a est un réseau local sans fil ou un réseau local utilisant le réseau de distribution d'énergie électrique du domicile 10a de l'utilisateur du réseau local domestique 150a comme médium de transmission des informations.

Lorsque le réseau local domestique 150a est un réseau local sans fil, le réseau local domestique 150a est préférentiellement un réseau local conforme au standard IEEE 802.11 communément appelé WIFI.

Conformément à la présente invention, il est établi, dans le réseau local domestique 150a, une session point à point, ou tunnel, entre la passerelle 100a et le dispositif de communication 120a. La session point à point permet de sécuriser les informations transmises, d'isoler les informations d'un premier type des informations d'un second type dans le réseau local domestique 150a, et permet aussi, l'implémentation d'un mécanisme d'acquittement des trames d'informations reçues. La session point à point est représentée par la flèche 152a en Fig. 1. La session point à point 152a est plus précisément conforme à la requête pour commentaires RFC 2516 de l'IETF intitulée « A Method for Transmitting PPP Over Ethernet PPPoE » et à la requête pour commentaires RFC 1661 de l'IETF et intitulée « The Point to Point Protocol ». PPP est l'acronyme de « Point to Point Protocol »

Les informations d'un second type sont transmises de manière classique dans le réseau local domestique 150a, ou en variante, par l'intermédiaire d'au moins une autre session point à point conforme à la RFC 2516 de l'IETF et à la RFC 1661.

La transmission des informations d'un second type est symbolisée par la flèche notée 154a.

Le réseau de communication 150b est un réseau local domestique auquel sont connectés un dispositif de communication d'un premier type 120b relié à un téléviseur 130b et un dispositif de communication d'un second type 140b. Le réseau local domestique 150b est identique au réseau local domestique 150a, il ne sera pas plus décrit.

Le dispositif de communication d'un premier type 120b est similaire au dispositif de communication d'un premier type 120a, il ne sera pas plus décrit. Le dispositif de communication d'un second type 140b est similaire au dispositif de communication d'un second type 140a, il ne sera pas plus décrit.

De la même manière que celle explicitée pour le réseau local domestique 150a, il est aussi établi une session point à point pour le transport des données de premier type dans le réseau local domestique 150b. La session point à point est représentée par la flèche 152b en Fig. 1. La session point à point 152b est plus précisément conforme à la RFC 2516 de l'IETF intitulée « A Method for Transmitting PPP Over Ethernet PPPoE » et à la RFC 1661 de l'IETF intitulée « The Point to Point Protocol ».

Les informations d'un second type sont transmises de manière classique dans le réseau local domestique 150b ou en variante par l'intermédiaire d'au moins une autre session point à point. La transmission des informations d'un second type est symbolisée par la flèche notée 154b.

Il est à remarquer ici que le domicile 10a de l'utilisateur du réseau local domestique 150a est voisin du domicile 10b de l'utilisateur du réseau local domestique 150b.

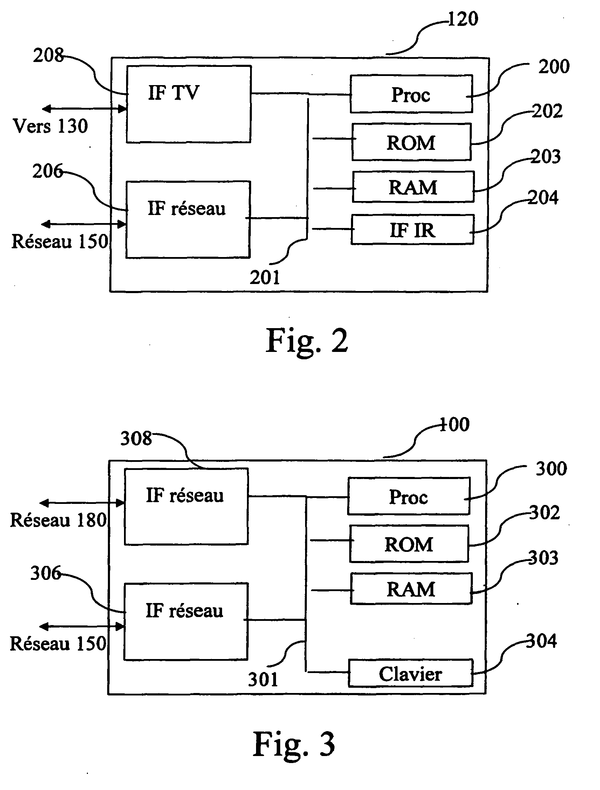

La **Fig. 2** représente un schéma bloc d'un dispositif de communication d'un premier type selon la présente invention.

Le dispositif de communication d'un premier type 120a ou 120b est adapté à effectuer à partir d'un premier module logiciel les étapes de l'algorithme tel que décrit en référence à la Fig. 4.

Le dispositif de communication d'un premier type 120 est de manière non limitative un dispositif de communication 120 tel qu'une STB. Le dispositif de communication 120 comporte un bus de communication 201 auquel sont reliés un processeur 200, une mémoire non volatile 202, une mémoire vive 203, une interface infrarouge 204 permettant la réception de codes infrarouges issus de la télécommande associée au dispositif de communication 120, une interface de communication 206 permettant l'échange d'informations avec le réseau local domestique 150 et une interface télévision 208 permettant le transfert des programmes audiovisuels reçus du réseau local domestique 150 vers le téléviseur 130 ainsi que le transfert de messages d'invitation conformément à la présente invention.

La mémoire non volatile 202 mémorise le premier module logiciel mettant en oeuvre l'invention, ainsi que les données permettant de mettre en oeuvre l'algorithme qui sera décrit par la suite en référence à la Fig. 4.

De manière plus générale, les programmes selon la présente invention sont mémorisés dans un moyen de stockage. Ce moyen de stockage est lisible par le microprocesseur 200. Ce moyen de stockage est intégré ou non au dispositif de communication d'un premier type 120, et peut être amovible.

Lors de la mise sous tension du dispositif de communication d'un premier type 120, le premier module logiciel selon la présente invention est transféré dans la mémoire vive 203 qui contient alors le code exécutable de l'invention ainsi que les données nécessaires à la mise en oeuvre de l'invention.

L'interface de communication 206 du réseau de communication 150 associée au dispositif de communication 120 est comprise dans le dispositif de communication 120. L'interface de communication 206 est, par exemple, une interface de communication conforme au standard IEEE 802.11 ou au standard « HomePlug 1.0 ».

L'interface de communication 206 mémorise le secret partagé lorsque le dispositif de communication d'un premier type est associé à la passerelle 100. Pour le standard IEEE 802.11, le secret partagé est composé de l'identifiant SSID et de la clef de chiffrement. Pour un réseau local domestique utilisant le réseau de distribution d'énergie électrique du domicile de l'utilisateur du réseau local domestique comme médium de transmission des informations, le secret partagé se résume à la clef NEK de chiffrement.

L'interface de communication 206 est apte à déchiffrer et/ou chiffrer à partir d'au moins une partie du secret partagé, en l'occurrence la clé de chiffrement, les informations transitant dans la session point à point établie entre la passerelle 100 et le dispositif de communication d'un premier type 120.

Dans une variante de réalisation, l'interface de communication 206 du réseau de communication 150 associée au dispositif de communication 120 n'est pas comprise dans le dispositif de communication 120. Selon cette variante, l'interface de communication 206 est reliée au dispositif de communication 120 par l'intermédiaire d'une liaison, par exemple, de type Ethernet.

La **Fig. 3** représente un schéma synoptique d'une passerelle selon la présente invention.

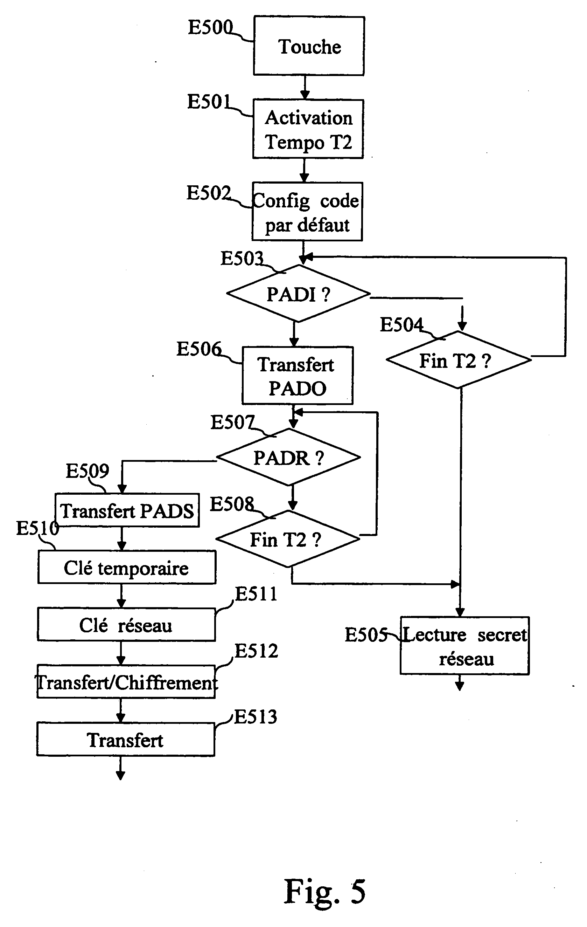

La passerelle 100a ou 100b est adaptée à effectuer à partir d'un second module logiciel les étapes de l'algorithme tel que décrit en référence à la Fig. 5.

La passerelle 100 comporte un bus de communication 301 auquel sont reliés un processeur 300, une mémoire non volatile 302, une mémoire vive 303, un clavier 304 comprenant au moins une touche prédéterminée, une interface de communication 306 permettant l'échange de données avec le réseau local domestique 150, une interface de communication 308 permettant l'échange de données avec le réseau de communication 180.

La mémoire non volatile 302 mémorise les programmes mettant en oeuvre l'invention, ainsi que les données permettant de mettre en oeuvre l'algorithme qui sera décrit par la suite en référence à la Fig. 5.

De manière plus générale, le second module logiciel selon la présente invention est mémorisé dans un moyen de stockage. Ce moyen de stockage est lisible par le microprocesseur 300. Ce moyen de stockage est intégré ou non à la passerelle 100, et peut être amovible.

Lors de la mise sous tension de la passerelle 100, le second module logiciel selon la présente invention est transféré dans la mémoire vive 303 qui contient alors le code exécutable de l'invention ainsi que les données nécessaires à la mise en oeuvre de l'invention.

L'interface de communication 306 du réseau de communication 150 associée à la passerelle 100 est comprise dans la passerelle 100. L'interface de communication 306 est, par exemple, une interface de communication conforme au standard IEEE 802.11 ou au standard « HomePlug 1.0 ».

L'interface de communication 306 mémorise le secret partagé, défini par l'utilisateur du réseau local domestique 150, ou de manière automatique par le processeur 300.

Pour le standard IEEE 802.11, le secret partagé est composé de l'identifiant SSID et d'une clef de chiffrement. Pour un réseau local domestique utilisant le réseau de distribution d'énergie électrique du domicile de l'utilisateur du réseau local domestique comme médium de transmission des informations, le secret partagé est la clef NEK de chiffrement.

L'interface de communication 306 est apte à déchiffrer et/ou chiffrer à partir d'au moins une partie du secret partagé, en l'occurrence la clé de chiffrement, les informations transitant dans la session point à point établie entre la passerelle 100 et le dispositif de communication d'un premier type 120.

Dans une variante de réalisation, l'interface de communication 306 associée à la passerelle 100 n'est pas comprise dans la passerelle 100. Selon cette variante, l'interface de communication 306 est reliée à la passerelle 100 par l'intermédiaire d'une liaison, par exemple, de type Ethernet.

La **Fig. 4** représente un diagramme illustrant l'algorithme exécuté par un dispositif de communication d'un premier type pour créer une session point à point dans le réseau local domestique avec la passerelle et pour associer ce dispositif de communication à la passerelle, selon la présente invention.

Cet algorithme, ou premier module logiciel, est exécuté lorsque le dispositif de communication d'un premier type 120a est mis en service au domicile 10a de l'utilisateur du réseau local sans fil 150a ou lors du remplacement de l'interface réseau 206 du dispositif de communication d'un premier type 120a.

Il est à remarquer ici que, le présent algorithme est aussi exécuté, en variante, par le dispositif de communication d'un second type 140.

A l'étape E400, le processeur 200 du dispositif de communication 120a détecte la mise en service du dispositif de communication 120a au domicile 10a de l'utilisateur du réseau local sans fil 150a.

A l'étape suivante E401, le processeur 200 commande le transfert de la mémoire vive 203 vers le téléviseur 130a et par l'intermédiaire de l'interface télévision 208, d'un message audiovisuel, à l'attention de l'utilisateur du réseau local sans fil 150a, d'invitation à appuyer sur une touche prédéterminée de la passerelle 100a du réseau local domestique 150a. Le message d'invitation est reproduit par le téléviseur 130a relié au dispositif de communication 120a. En variante le message d'invitation est reproduit sur l'écran ou un témoin lumineux du dispositif de communication 120a. A cette même étape, le processeur 200 configure l'interface réseau associée 206 de manière à ce que celle-ci utilise l'identifiant prédéterminé défini en usine par le constructeur du dispositif de communication 120a pour associer le dispositif de communication 120a à une passerelle selon la présente invention. Cet identifiant est le SSID défini en usine lorsque le réseau local domestique 150 est un réseau de type IEEE 802.11 ou la clé de chiffrement par défaut connue de tous les dispositifs conformes au standard « HomePlug 1.0 ».

A l'étape suivante E402, le processeur 200 active une temporisation notée T1 qui est de l'ordre de quelques dizaines de secondes.

A l'étape suivante E403, le processeur 200 commande le transfert, par l'intermédiaire de l'interface réseau 206, d'un paquet de type PADI conforme à la RFC 2516. PADI est l'acronyme de « PPPoE Active Discovery Initialisation ». Un paquet PADI est un paquet d'initialisation de découverte active des différents points d'accès qui sont présents dans l'environnement du dispositif de communication 120a. Le paquet de découverte ou d'initialisation PADI comprend une adresse de diffusion dans le champ « adresse de destination ». Le paquet PADI comprend aussi le service que le dispositif de communication 120a souhaite, en l'occurrence la réception d'informations de type audiovisuelles ainsi que l'adresse du dispositif de communication 120a.

Il est à remarquer ici que lorsque le dispositif de communication 120a a déjà été associé à la passerelle 100a, le processeur 200 n'effectue pas les étapes E400 à E402 et commande le transfert, par l'intermédiaire de l'interface réseau 206, dès la mise sous tension du dispositif de communication 120a, d'un paquet de type PADI.

A l'étape suivante E404, le processeur 200 vérifie si un paquet de type PADO conforme à la RFC 2516 a été reçu par l'interface réseau 206. PADO est l'acronyme de « PPPoE Active Discovery Offer ». Un paquet de type PADO est un paquet d'offre de services par un point d'accès, en l'occurrence la passerelle 100a du réseau local domestique 150a. Lorsque la passerelle 100a est selon l'invention dans le mode d'association et qu'elle reçoit un paquet de type PADI qu'elle peut servir, la passerelle 100a répond au paquet PADI par un paquet de type PADO. Lorsque la passerelle 100a, reçoit un paquet de type PADI comprenant une adresse source qui est déjà mémorisée dans sa mémoire vive 303, la passerelle 100a répond au paquet PADI par un paquet de type PADO.

Le paquet de type PADO comprend l'adresse du dispositif de communication 120a, un identifiant de la passerelle 100a, ainsi que le nom du ou des services offerts par la passerelle 100a. Selon l'invention, l'identifiant de la passerelle 100a transféré dans le paquet PADO est l'identifiant prédéterminé, plus précisément l'identifiant de la passerelle 100a défini en usine par le constructeur de la passerelle. S'il n'est pas reçu de paquet PADO, le processeur 200 passe à l'étape E406. Si un paquet de type PADO est reçu, le processeur 200 passe à l'étape E405 qui consiste à mémoriser dans la mémoire vive 203, les informations comprises dans le paquet PADO reçu. Lorsque cette opération est effectuée, le processeur 200 passe à l'étape suivante E406.

L'étape E406 consiste à vérifier si la temporisation T1, activée précédemment à l'étape E402, est écoulée ou non. Dans la négative, le processeur 200 retourne à l'étape E403 et effectue la boucle constituée des étapes E403 à E406 tant que la temporisation T1 n'est pas écoulée. Lorsque la temporisation T1 est écoulée, le processeur 200 passe à l'étape suivante E407.

L'étape E407 consiste à vérifier si au moins un paquet de type PADO a été reçu. Dans la négative, le processeur 200 retourne à l'étape E400 et effectue la boucle constituée des étapes E400 à E407 jusqu'à la réception d'un paquet de type PADO.

Lorsqu'au moins un paquet de type PADO est reçu, le processeur 200 passe à l'étape suivante E408.

L'étape E408 consiste à vérifier si au moins deux paquets de type PADO ont été reçus. Si au moins deux paquets de type PADO ont été reçus, le processeur 200 passe à l'étape E409. Si un seul paquet de type PADO a été reçu, le processeur 200 passe à l'étape E411.

A l'étape E409, le processeur 200 commande le transfert, de la mémoire vive 203 vers le téléviseur 130a et par l'intermédiaire de l'interface TV 208, d'un message audiovisuel à l'attention de l'utilisateur du réseau local sans fil 150a, d'invitation à sélectionner parmi les points d'accès du réseau local sans fil 150a ayant émis un paquet de type PADO, la passerelle 100a avec laquelle il souhaite qu'une session point à point conforme au protocole PPPoE soit établie. Le message d'invitation est reproduit par le téléviseur 130a relié au dispositif de communication 120a. En effet, le paquet PADI a été envoyé en diffusion, le dispositif de communication 120a peut ainsi recevoir plusieurs paquets de type PADO issus de différents point d'accès du réseau local domestique 150a. L'utilisateur du réseau local domestique 150a doit alors en choisir un, en l'occurrence la passerelle 100a.

A l'étape suivante, E410, le processeur 200 reçoit, par l'intermédiaire de l'interface infrarouge 204, une commande de sélection. La commande de sélection a été effectuée par l'utilisateur du réseau local domestique 150a à l'aide de la télécommande du dispositif de communication 120a.

La commande de sélection étant reçue, le processeur 200 passe à l'étape suivante E411 qui consiste à commander le transfert d'un paquet de type PADR conforme à la RFC 2516. PADR est l'acronyme de « PPPoE Active Discovery Request ». Le paquet de requête de découverte active PADR comprend l'adresse de la passerelle 100a sélectionnée.

A l'étape suivante E412, la session point à point est alors établie entre la passerelle 100a et le dispositif de communication 120a. Le processeur 200 reçoit à cette étape un paquet de type PADS conforme à la RFC 2516 qui comprend un identificateur unique de la session point à point. PADS est l'acronyme de « PPPoE Active Discovery Session-confirmation ».

A l'étape suivante E413, le processeur 200 négocie, dans la session point à point ainsi établie avec la passerelle 100a, une clef de chiffrement temporaire. Le protocole de négociation de la clef de chiffrement temporaire est, par exemple, celui tel que développé par Diffie et Hellman dans la publication intitulée « New directions in Cryptography » publiée dans la revue IEEE Transactions on Information Theory (1976), pages 644-654.

Cette opération effectuée, le processeur 200 passe à l'étape E414 qui consiste à recevoir le secret partagé du réseau local domestique 150a, transféré par la passerelle 100a dans la session point à point 152a, et chiffré avec la clef temporaire précédemment négociée. Lorsque le réseau local domestique est un réseau sans fil, le secret partagé est la clef WEP ainsi que le SSID défini par l'utilisateur du réseau local domestique 150a ou défini automatiquement par le processeur 300 de la passerelle 100.

Lorsque le réseau local domestique est un réseau local domestique utilisant le réseau de distribution d'énergie électrique du domicile de l'utilisateur du réseau de communication 150a comme médium de transmission des informations, le secret partagé est une clef de chiffrement conforme au standard « Homeplug 1.0 » définie par l'utilisateur du réseau local domestique 150a ou définie automatiquement par le processeur 300 de la passerelle 100.

En variante, d'autres informations telles qu'un mot de passe ou un certificat sont transférées de la même manière.

Cette opération effectuée, le processeur 200 passe à l'étape E415 qui consiste à transférer le secret partagé à l'interface de communication 206. L'interface de communication 206 déchiffre les informations de premier type avec la clef de chiffrement du secret partagé déchiffrée précédemment.

A l'étape suivante E416 le processeur 200 reçoit, par l'intermédiaire de la session point à point établie, les informations de premier type déchiffrées par l'interface de communication 206.

Ainsi, le dispositif de communication 120a est associé à la passerelle 100a dans le réseau local domestique 150a. Le dispositif de communication 120a peut ainsi transférer et/ou recevoir des informations sécurisées dans le réseau local domestique 150a.

La **Fig. 5** représente l'algorithme exécuté par la passerelle pour la création d'une session point à point dans le réseau local domestique avec le dispositif de communication d'un premier type et l'association du dispositif de communication d'un premier type à la passerelle selon la présente invention.

Cet algorithme, ou second module logiciel, est exécuté lorsque l'utilisateur du réseau local domestique 150a appuie sur une touche prédéterminée de la passerelle 100a, par exemple, suite à l'invitation telle qu'effectuée à l'étape E401 de l'algorithme tel que décrit à la Fig. 4 ou cet algorithme est exécuté en partie lorsque la passerelle 100a reçoit un paquet de type PADI comprenant une adresse source qui est déjà mémorisée dans la mémoire vive 303.

A l'étape E500, le processeur 300 de la passerelle 100a détecte un appui sur une touche prédéterminée du clavier 304 de la passerelle 100a. L'appui sur la touche prédéterminée provoque la mise de la passerelle 100a dans un mode d'association de dispositifs de communication aux services proposés par la passerelle 100a.

A l'étape suivante E501, le processeur 300 active une temporisation notée T2 qui est de l'ordre de quelques dizaines de secondes.

A l'étape suivante E502, le processeur 300 lit dans la mémoire vive 303 de la passerelle 100a, l'identifiant prédéterminé de la passerelle 100a défini en usine par le constructeur de la passerelle 100a. Il est à remarquer ici qu'à cette même étape, le secret partagé utilisé jusqu'alors par l'interface de communication 306 dans le réseau local domestique 150a est obtenu par le processeur 300 et est mémorisé dans la mémoire vive 303.

A cette même étape, le processeur 300 transfère à l'interface réseau 306 associée l'identifiant prédéterminé de manière à ce que celle-ci utilise l'identifiant prédéterminé en usine par le constructeur de la passerelle 100a pour associer, à la passerelle 100a, un dispositif de communication selon la présente invention. Cet identifiant est le SSID défini en usine lorsque le réseau local domestique 150 est un réseau de type IEEE 802.11 ou la clé de chiffrement par défaut connue de tous les dispositifs conformes au standard « HomePlug 1.0 ». Ceci correspond à la configuration de la passerelle 100a dans un mode d'association.

A l'étape suivante E503, le processeur 300 vérifie si un paquet de type PADI conforme à la RFC 2516 a été reçu par l'interface réseau 306. Le paquet de type PADI est un paquet tel que celui transmis par le dispositif de communication 120a à l'étape E403 de la Fig. 4.

Lorsque la passerelle 100a reçoit un paquet de type PADI comprenant une adresse source qui est déjà mémorisée dans sa mémoire vive 303 sans qu'un appui sur une touche prédéterminée du clavier 204 de la passerelle 100a n'ait été détecté, le processeur 300 passe à l'étape E506.

Dans la négative, le processeur 300 passe à l'étape E504. Dans l'affirmative, le processeur 300 passe à l'étape E506.

A l'étape E504, le processeur 300 vérifie si la temporisation T2 activée précédemment à l'étape E501 est écoulée ou non. Dans la négative, le processeur 300 retourne à l'étape E503 et effectue la boucle constituée des étapes E503 à E504 tant que la temporisation T2 n'est pas écoulée. Lorsque la temporisation T2 est écoulée, le processeur 300 passe à l'étape E505.

A l'étape E505, l'association du dispositif de communication 120a a échoué, le processeur 300 lit dans la mémoire non volatile le secret partagé précédemment mémorisé à l'étape E502 et utilise celle-ci pour transférer les trames d'informations dans le réseau local domestique 150a.

Il est à remarquer ici que, si la passerelle 100a reçoit un paquet de PADI après la fin de la temporisation T2, la passerelle 100a ne répondra à celui-ci que si l'identifiant du dispositif de communication 120a compris dans le paquet PADI est identique à un identifiant préalablement mémorisé par la passerelle 100a. Ceci permet d'éviter que des dispositifs de communication n'appartenant pas à l'utilisateur du réseau local domestique 150a puissent accéder aux services de la passerelle 100a. L'appui sur une touche prédéterminée de la passerelle 100a correspond ainsi à une autorisation implicite de l'utilisateur du réseau local domestique à l'association de nouveaux dispositifs de communication 120a ou 140a à la passerelle 100a et cela, pendant une durée égale à celle de la temporisation T2.

A l'étape E506, le processeur 300 commande le transfert d'un paquet de type PADO conforme à la RFC 2516 sur le réseau local domestique 150a. Le paquet de type PADO est un paquet d'offre de service par la passerelle 100a du réseau local domestique 150a. Lorsque la passerelle 100a est selon l'invention, dans le mode d'association et qu'elle a reçu un paquet de type PADI qu'elle peut servir, la passerelle 100a répond au paquet PADI par un paquet de type PADO. Le paquet de type PADO comprend l'adresse du dispositif de communication 120a ayant émis le paquet PADI, l'identifiant prédéterminé de la passerelle 100a défini en usine, ainsi que le nom du ou des services offerts par la passerelle 100a.

Selon l'exemple de la Fig. 1, si l'utilisateur du réseau local domestique 150a installe le dispositif de communication 120a, le paquet PADI est transmis à la passerelle 100a et peut être aussi transmis à la passerelle 100b du réseau local domestique voisin 150b. L'utilisateur du réseau local sans fil 150a ayant appuyé sur la touche prédéterminée de la passerelle 100a, la passerelle 100a répond au paquet PADI par un paquet PADO. L'utilisateur du réseau local sans fil 150b n'ayant appuyé sur la touche prédéterminée de la passerelle 100b, la passerelle 100b ne répond pas au paquet PADI.

Si l'utilisateur du réseau local sans fil 150a n'a pas appuyé sur la touche prédéterminée de la passerelle 100a, le processeur 300 vérifie si l'adresse comprise dans le paquet PADI reçu est égale ou non à une des adresses mémorisées dans la mémoire vive 303 de la passerelle 100a. En effet, à chaque fois qu'un nouveau dispositif de communication 120a ou 140a est associé à la passerelle 100a ou configuré dans le réseau, la passerelle 100a mémorise l'adresse du dispositif de communication 120a ou 140a. Si l'adresse comprise dans le paquet PADI reçu est égale à une des adresses mémorisées dans la mémoire vive 203, la passerelle 100a répond au paquet PADI par un paquet PADO. Si l'adresse comprise dans le paquet PADI reçu n'est pas égale à une des adresses mémorisées dans la mémoire vive 303, la passerelle 100a ne répond pas au paquet PADI par un paquet PADO.

A l'étape suivante E507, le processeur 300 vérifie si un paquet de type PADR conforme à la RFC 2516 a été reçu par l'interface réseau 306. Le paquet de type PADR est un paquet tel que celui transmis par le dispositif de communication120a à l'étape E411 de la Fig. 4.

Dans la négative, le processeur 300 passe à l'étape E508. Dans l'affirmative, le processeur 300 passe à l'étape E509.

A l'étape E508, le processeur 300 vérifie si la temporisation T2 activée précédemment à l'étape E501 est écoulée ou non. Dans la négative, le processeur 300 retourne à l'étape E507 et effectue la boucle constituée des étapes E507 à E508 tant que la temporisation T2 n'est pas écoulée. Lorsque la temporisation T2 est écoulée, le processeur 300 passe à l'étape E505 précédemment décrite.

A l'étape E509, le processeur 300 commande le transfert d'un paquet de type PADS conforme à la RFC 2516 qui comprend un identificateur unique de session point à point. La session point à point est ainsi établie entre la passerelle 100a et le dispositif de communication 120a.

A l'étape suivante E510, le processeur 300 négocie avec le dispositif de communication 120a, dans la session point à point ainsi établie, une clef de chiffrement temporaire. Le protocole de négociation de la clef de chiffrement temporaire est, par exemple, celui tel que développé par Diffie et Hellman susmentionné.

A l'étape E511, le processeur 300 lit dans la mémoire non volatile 302 le secret partagé précédemment mémorisé à l'étape E502 et transfère dans la session point à point 152a le secret partagé chiffré avec la clef temporaire précédemment négociée. Lorsque le réseau local domestique 150a est un réseau sans fil, le secret partagé est la clef WEP et le SSID. Lorsque le réseau local domestique 150a est un réseau local domestique utilisant le réseau de distribution d'énergie électrique du domicile de l'utilisateur du réseau local domestique comme médium de transmission des informations, le secret partagé se résume à la clef NEK de chiffrement.

En variante, le processeur 300 génère un nouveau secret partagé.

A l'étape suivante E512 le processeur 300 transfère à l'interface réseau 306 associée le secret partagé de manière à ce que celle-ci utilise le secret partagé et commande le transfert des informations d'un premier type vers l'interface de communication 306. L'interface de communication 306 chiffre les informations d'un premier type avec la clef de chiffrement du secret partagé et transfère, à l'étape E513, les informations chiffrées, dans la session point à point établie 152a avec le dispositif de communication 120a.

Ainsi, le dispositif de communication 120a est configuré dans le réseau local domestique 150a et est associé à la passerelle 100a. La passerelle 100a peut ainsi transférer et/ou recevoir des informations sécurisées dans le réseau local domestique 150a.

Bien entendu, la présente invention n'est nullement limitée aux modes de réalisation décrits ici, mais englobe, bien au contraire, toute variante à la portée de l'homme du métier inclue dans le domaine de protection tel que défini par les revendications.

## Revendications

1. Procédé d'association d'un dispositif de communication (120a), par l'intermédiaire d'un réseau de communication (150a), à une passerelle (100a), tel que le procédé comporte l'étape effectuée par la passerelle (100a) de:
- détection (E500) d'au moins une commande effectuée par l'utilisateur du réseau de communication (150a); **caractérisé en ce que** le procédé comporte ensuite les étapes effectuées par la passerelle de :
- obtention (E502) du secret partagé de l'interface de communication associée à la passerelle et transfert d'un identifiant prédéterminé, à l'interface de communication associée à la passerelle pour la configuration de l'interface de communication dans un mode d'association;
- transfert (E506, E509) dans le réseau de communication, de messages à destination du dispositif de communication, pour l'établissement dans le réseau de communication d'une session point à point entre la passerelle et le dispositif de communication ;
- transfert (E511) dans la session point à point établie, du secret partagé, pour l'association du dispositif de communication à la passerelle.

2. Procédé selon la revendication 1, **caractérisé en ce que** la passerelle reçoit des informations d'un réseau de communication public (180), et lorsque le secret partagé est transféré dans la session point à point établie, le procédé comporte les étapes de :
- transfert (E512) du secret partagé à l'interface de communication associée à la passerelle ;
- transfert (E513) des informations, vers l'interface de communication associée à la passerelle, pour le chiffrement, par l'interface de communication associée à la passerelle, des informations à partir d'au moins une partie du secret partagé et pour le transfert des informations chiffrées au dispositif de communication dans la session point à point établie.

3. Procédé selon la revendication 2, **caractérisé en ce que** le procédé comporte, préalablement au transfert dans la session point à point établie du secret partagé, l'étape de transfert (E510), dans le réseau de communication, de messages à destination du dispositif de communication, pour la négociation d'une clef de chiffrement temporaire, et **en ce que** le secret partagé est chiffré par la clef de chiffrement temporaire.

4. Procédé selon l'une quelconque des revendications précédentes, **caractérisé en ce que** les informations reçues par la passerelle du réseau de communication public, sont des informations d'un premier type (181a) et des informations d'un second type (182a), les informations d'un premier type étant des informations fournies par un premier fournisseur de service, les informations d'un second type étant différentes des informations d'un premier type et **en ce que** les informations transférées par la passerelle dans la session point à point établie (152a), sont les informations d'un premier type.

5. Procédé d'association d'un dispositif de communication (120a) à une passerelle (100a), par l'intermédiaire d'un réseau de communication, tel que le procédé comporte l'étape effectuée par le dispositif de communication de :
- génération (E401) d'au moins un message d'invitation de l'utilisateur du réseau de communication à appuyer sur une touche prédéterminée de la passerelle; **caractérisé en ce que** le procédé comporte ensuite les étapes effectuées par le dispositif de communication de :
- transfert (E403, E411) dans le réseau de communication, de messages à destination de la passerelle, pour l'établissement dans le réseau de communication, d'une session point à point entre la passerelle et le dispositif de communication ;
- réception (E414), dans la session point à point établie, d'un secret partagé, pour l'association du dispositif de communication à la passerelle.

6. Procédé selon la revendication 5, **caractérisé en ce que** la passerelle reçoit des informations d'un réseau de communication public (180), et lorsque le secret partagé est transféré dans la session établie, le procédé comporte l'étape de réception (E415) des informations dans la session point à point établie, les informations étant préalablement déchiffrées par une interface de communication du réseau de communication associée au dispositif de communication, à partir d'au moins une partie du secret partagé reçu.

7. Passerelle d'un réseau de communication auquel est relié un dispositif de communication (120a), telle que la passerelle comporte :
- des moyens de détection d'au moins une commande effectuée par l'utilisateur du réseau de communication (150a); **caractérisée en ce que** la passerelle comporte aussi :
- des moyens d'obtention du secret partagé de l'interface de communication associée à la passerelle ;
- des moyens de transfert d'un identifiant prédéterminé, à l'interface de communication associée à la passerelle pour la configuration de l'interface de communication dans un mode d'association ;
- des moyens de transfert dans le réseau de communication, de messages à destination du dispositif de communication, pour l'établissement dans le réseau de communication d'une session point à point entre la passerelle et le dispositif de communication ;
- des moyens de transfert dans la session établie, du secret partagé, pour l'association du dispositif de communication à la passerelle.

8. Dispositif de communication apte à être associé à une passerelle par l'intermédiaire d'un réseau de communication, tel que le dispositif de communication comporte :
- des moyens de génération d'au moins un message d'invitation de l'utilisateur du réseau de communication à appuyer sur une touche prédéterminée de la passerelle ; **caractérisé en ce que** le dispositif de communication comporte aussi :
- des moyens de transfert dans le réseau de communication, de messages à destination de la passerelle, pour l'établissement dans le réseau de communication, d'une session point à point entre la passerelle et le dispositif de communication ;
- des moyens de réception dans la session point à point établie, d'un secret partagé, pour l'association du dispositif de communication à la passerelle.

9. Système d'association d'un dispositif de communication (120a), par l'intermédiaire d'un réseau de communication (150a), à une passerelle (100a), **que** le système d'association comporte :
- des moyens de génération d'au moins un message d'invitation de l'utilisateur du réseau de communication à appuyer sur une touche prédéterminée de la passerelle ;
- des moyens de détection d'au moins une commande effectuée par l'utilisateur du réseau de communication ; **caractérisé en ce que** le système d'association comporte aussi :
- des moyens d'obtention du secret partagé de l'interface de communication associée à la passerelle ;
- des moyens de transfert d'un identifiant prédéterminé, à l'interface de communication associée à la passerelle pour la configuration de l'interface de communication dans un mode d'association ;
- des moyens de transfert dans le réseau de communication, de messages à destination du dispositif de communication, pour l'établissement dans le réseau de communication d'une session point à point entre la passerelle et le dispositif de communication ;
- des moyens de transfert dans la session établie, du secret partagé, pour l'association du dispositif de communication à la passerelle.

10. Système selon la revendication 9, **caractérisé en ce que** le réseau de communication est un réseau local sans fil ou un réseau local utilisant le réseau de distribution d'énergie électrique du domicile de l'utilisateur du réseau de communication comme médium de transmission des informations.

## Claims

1. Process for linking a communication device (120a) with a gateway (100a), via a communication network (150a), such that the process comprises the step carried out by the gateway (100a) of
- detecting (E500) at least one command carried out by the user of the communication network (150a);
**characterised in that** the process then comprises the steps carried out by the gateway of:
- obtaining (E502) the shared secret from the communication interface linked to the gateway and transferring a predetermined identifier to the communication interface linked to the gateway for configuring the communication interface in a linking mode;
- transferring (E506, E509) into the communication network messages intended for the communication device, in order to establish, in the communication network, a point to point session between the gateway and the communication device;
- transferring (E511) the shared secret into the point to point session established, in order to link the communication device with the gateway.

2. Process according to claim 1, **characterised in that** the gateway receives data from a public communication network (180) and when the shared secret is transferred into the point to point session established, the process comprises the steps of:
- transferring (E512) the shared secret to the communication interface linked to the gateway;
- transferring (E513) data to the communication interface linked to the gateway, in order to encrypt, via the communication interface linked to the gateway, the data from at least part of the shared secret and in order to transfer the encrypted data to the communication device in the point to point session established.

3. Process according to claim 2, **characterised in that** the process comprises, prior to the transfer of the shared secret to the point to point session established, the step of transferring (E510), into the communication network, messages intended for the communication device, in order to negotiate a temporary encryption key, and **in that** the shared secret is encrypted by the temporary encryption key.

4. Process according to any one of the preceding claims, **characterised in that** the data received by the gateway of the public communication network are data of a first type (181a) and data of a second type (182a), the first type of data being data supplied by a first service provider, the second type of data being different from the first type of data, and **in that** the data transferred via the gateway into the point to point session established (152a) are data of a first type.

5. Process for linking a communication device (120a) to a gateway (100a), via a communication network, such that the process comprises the step carried out by the communication device of:
- generating (E401) at least one message inviting the user of the communication network to press a predetermined key of the gateway;
**characterised in that** the process then comprises the steps carried out by the communication device of:
- transferring (E403, E411) into the communication network messages intended for the gateway, in order to establish in the communication network a point to point session between the gateway and the communication device;
- receiving (E414), in the point to point session established, a shared secret, in order to link the communication device to the gateway.

6. Process according to claim 5, **characterised in that** the gateway receives data from a public communication network (180), and when the shared secret is transferred into the established session, the process comprises the step of receiving (E415) data in the point to point session established, the data being decoded beforehand by a communication interface of the communication network linked to the communication device, on the basis of at least part of the shared secret received.

7. Gateway of a communication network to which a communication device (120a) is connected, such that the gateway comprises:
- means for detecting at least one command carried out by the user of the communication network (150a);
**characterised in that** the gateway also comprises:
- means for obtaining the shared secret from the communication interface linked to the gateway;
- means for transferring a predetermined identifier to the communication interface linked to the gateway, in order to configure the communication interface in a linking mode;
- means for transferring into the communication network messages intended for the communication device, in order to establish, in the communication network, a point to point session between the gateway and the communication device;
- means for transferring the shared secret into the established session, in order to link the communication device to the gateway.

8. Communication device adapted to be linked to a gateway via a communication network, such that the communication device comprises:
- means for generating at least one message inviting the user of the communication network to press a predetermined key on the gateway;
**characterised in that** the communication device also comprises:
- means for transferring, into the communication network, messages intended for the gateway, in order to establish, in the communication network, a point to point session between the gateway and the communication device;
- means for receiving a shared secret in the point to point session established, for linking the communication device with the gateway.

9. System for linking a communication device (120a), via a communication network (150a), with a gateway (100a), such that the linking system comprises:
- means for generating at least one message inviting the user of the communication network to press a predetermined key on the gateway;
- means for detecting at least one command carried out by the user of the communication network;
**characterised in that** the linking system also comprises:
- means for obtaining the shared secret from the communication interface linked to the gateway;
- means for transferring a predetermined identifier to the communication interface linked to the gateway for configuring the communication interface in a linking mode;
- means for transferring to the communication network messages intended for the communication device, in order to establish, in the communication network, a point to point session between the gateway and the communication device;
- means for transferring the shared secret into the session established, in order to link the communication device with the gateway.

10. System according to claim 9, **characterised in that** the communication network is a local wireless network or a local network using the electrical energy distribution network of the home of the user of the communication network as the medium for transmitting data.

## Patentansprüche

1. Verfahren zur Zuordnung einer Kommunikationsvorrichtung (120a) mittels eines Kommunikationsnetzes (150a) zu einem Gateway (100a), wobei das Verfahren den von dem Gateway (100a) durchgeführten Schritt des Erfassens (E500) wenigstens einen durch den Benutzer des Kommunikationsnetzes (150a) ausgeführten Befehl umfasst,
**dadurch gekennzeichnet, dass**
das Verfahren weiterhin die von dem Gateway (100a) durchgeführten folgenden Schritte umfasst:
- Erhalten (E502) des gemeinsamen Kennworts der dem,
- Gateway zugehörigen Kommunikationsschnittstelle und Übermittlung einer vorbestimmten Identifikation an die dem Gateway zugeordnete Kommunikationsschnittstelle, um die Kommunikationsschnittstelle in einen verbundenen Zustand zu konfigurieren;
- Übermittlung (E506, E509) von für die Kommunikationsvorrichtung bestimmten Mitteilungen in dem Kommunikationsnetz, um in dem Kommunikationsnetz zwischen dem Gateway und der Kommunikationsvorrichtung eine Punkt-zu-Punkt-Verbindung herzustellen;
- Übermittlung (E511) des gemeinsamen Kennworts in der hergestellten Punkt-zu-Punkt-Verbindung, um die Kommunikationsvorrichtung dem Gateway zuzuordnen.

2. Verfahren nach Anspruch 1,
**dadurch gekennzeichnet, dass**
das Gateway Information aus einem öffentlichen Kommunikationsnetz (180) empfängt und das Verfahren nach dem Transfer des gemeinsamen Kennworts in der hergestellten Punkt-zu-Punkt-Verbindung die folgenden Schritte umfasst:
- Übermittlung (E512) des gemeinsamen Kennworts an die dem Gateway zugeordnete Kommunikationsschnittstelle;
- Übermittlung (E513) von Informationen über die dem Gateway zugeordnete Kommunikationsschnittstelle zur Verschlüsselung der Informationen von wenigstens eines Teils des gemeinsamen Kennworts durch die dem Gateway zugeordnete Kommunikationsschnittstelle und zur Übermittlung der verschlüsselten Informationen in der hergestellten Punkt-Zu-Punkt-Verbindung an die Kommunikationsvorrichtung.

3. Verfahren nach Anspruch 2,
**dadurch gekennzeichnet, dass**
das Verfahren, vorzugsweise bei der Übermittlung des gemeinsamen Kennworts in der hergestellten Punkt-zu-Punkt-Verbindung, den Schritt der Übermittlung (E510) von für die Kommunikationsvorrichtung bestimmten Mitteilungen in dem Kommunikationsnetz umfasst, um einen temporären Verschlüsselungsschlüssel auszuhandeln, wobei das gemeinsame Kennwort mittels des temporären Verschlüsselungsschlüssel verschlüsselt wird.

4. Verfahren nach einem beliebigen der vorangehenden Ansprüche,
**dadurch gekennzeichnet, dass**
es sich bei den von dem Gateway empfangenen Informationen des öffentlichen Kommunikationsnetzes um Informationen einer ersten Art (181a) und um Informationen einer zweiten Art (182a) handelt, wobei die Informationen der ersten Art Informationen sind, die von einem ersten Serviceanbieter bereitgestellt werden, die Informationen der zweiten Art Informationen sind, die sich von den Informationen der ersten Art unterscheiden, wobei es sich bei den von dem Gateway in der hergestellten Punkt-zu-Punkt-Verbindung übermittelten Informationen um Informationen der ersten Art handelt.

5. Verfahren zur Zuordnung einer Kommunikationsvorrichtung (120a) mittels eines Kommunikationsnetzes zu einem Gateway (100a), wobei das Verfahren den von der Kommunikationsvorrichtung durchgeführten Schritt der Erzeugung (E401) wenigstens einer Aufforderung an den Benutzer des Kommunikationsnetzes umfasst, eine vorbestimmte Taste des Gateways zu betätigen,
**dadurch gekennzeichnet, dass**
das Verfahren weiterhin die von der Kommunikationsvorrichtung durchgeführten Schritte umfasst:
- Übermittlung (E403, E411) von für das Gateway bestimmten Mitteilungen in dem Kommunikationsnetz, um in dem Kommunikationsnetz zwischen dem Gateway und der Kommunikationsvorrichtung eine Punkt-zu-Punkt-Verbindung herzustellen;
- Empfang (E414) eines gemeinsamen Kennworts in der hergestellten Punkt-zu-Punkt-Verbindung, um die Kommunikationsvorrichtung dem Gateway zuzuordnen.

6. Verfahren nach Anspruch 5,
**dadurch gekennzeichnet, dass**
das Gateway Informationen aus einem öffentlichen Kommunikationsnetz (180) empfängt und das Verfahren nach der Übermittlung des gemeinsamen Kennwortes in der hergestellten Verbindung den Schritt des Empfangs (E415) von Informationen in der hergestellten Punkt-zu-Punkt-Verbindung umfasst, wobei die Informationen vorzugsweise mittels einer der Kommunikationsvorrichtung zugeordneten Kommunikationsschnittstelle des Kommunikationsnetzes verschlüsselt werden, wobei die Informationen zumindest aus einem Teil des empfangenen gemeinsamen Kennwortes bestehen.

7. Gateway eines Kommunikationsnetzes, mit dem eine Kommunikationsvorrichtung (120a) verbunden ist, wobei das Gateway umfasst:
- Mittel zur Erfassung wenigstens eines von dem Benutzer des Kommunikationsnetzes (150a) ausgeführten Befehls,
**dadurch gekennzeichnet, dass**
das Gateway weiterhin umfasst:
- Mittel zum Erhalten des gemeinsamen Kennwortes der dem Gateway zugeordneten Kommunikationsschnittstelle;
- Mittel zur Übermittlung einer vorbestimmten Identifikation an die dem Gateway zugeordnete Kommunikationsschnittstelle, um die Kommunikationsschnittstelle in einem verbundenen Zustand zu konfigurieren;
- Mittel zur Übermittlung von für die Kommunikationsvorrichtung bestimmten Mitteilungen in dem Kommunikationsnetz, um in dem Kommunikationssnetz zwischen dem Gateway und der Kommunikationsvorrichtung eine Punkt-zu-Punkt-Verbindung herzustellen;
- Mittel zur Übermittlung des gemeinsamen Kennwortes in der hergestellten Sitzung, um die Kommunikationsvorrichtung dem Gateway zuzuordnen.

8. Kommunikationsvorrichtung, die einem Gateway mittels eines Kommunikationsnetzes zugeordnet werden kann, wobei die Kommunikationsvorrichtung umfasst:
- Mittel zur Erzeugung wenigstens einer an den Benutzer des Kommunikationsnetzes gerichteten Aufforderung, eine vorbestimmte Taste des Gateways zu betätigen,
**dadurch gekennzeichnet dass**,
die Kommunikationsvorrichtung weiterhin umfasst:
- Mittel zur Übermittlung von für das Gateway bestimmten Mitteilungen in dem Kommunikationsnetz, um in dem Kommunikationsnetz zwischen dem Gateway und der Kommunikationsvorrichtung eine Punkt-zu-Punkt-Verbindung herzustellen;
- Mittel zum Empfang eines gemeinsamen Kennworts, in der hergestellten Punkt-zu-Punkt-Verbindung, um die Kommunikationsvorrichtung dem Gateway zuzuordnen.

9. System zur Zuordnung einer Kommunikationsvorrichtung (120a) mittels eines Kommunikationsnetzes (150a) zu einem Gateway (100a), wobei das Zuordnungssystem umfasst:
- Mittel zur Erzeugung wenigstens einer an den Benutzer des Kommunikationsnetzes gerichteten Aufforderung, eine vorbestimmte Taste des Gateway zu betätigen;
- Mittel zur Erfassung wenigstens eines von dem Benutzer des Kommunikationsnetzes ausgeführten Befehls;
**dadurch gekennzeichnet, dass**
das Zuordnungssystem weiterhin umfasst:
- Mittel zum Erhalten des gemeinsamen Kennworts der dem Gateway zugeordneten Kommunikationsschnittstelle;
- Mittel zur Übermittlung einer vorbestimmten Identifikation an die dem Gateway zugeordnete Kommunikationsschnittstelle, um die Kommunikationsschnittstelle in einem verbundenen Zustand zu konfigurieren;
- Mitteil zur Übermittlung von für die Kommunikationsvorrichtung bestimmten Mitteilungen in dem Kommunikationsnetz, um in dem Kommunikationsnetz zwischen dem Gateway und der Kommunikationsvorrichtung eine Punkt-zu-Punkt-Verbindung herzustellen;
- Mittel zur Übermittlung des gemeinsamen Kennworts in der hergestellten Verbindung, um die Kommunikationsvorrichtung dem Gateway zuzuordnen.

10. System nach Anspruch 9,
**dadurch gekennzeichnet, dass**
es sich bei dem Kommunikationsnetz um ein kabelloses Netz oder um ein lokales Netz handelt, das die Vernetzung zur Verteilung der elektrischen Energie am Wohnort des Benutzers des Kommunikationsnetzes als Medium zur Übertragung von Informationen verwendet.
